# EUROPÄISCHE PATENTSCHRIFT

(11) **EP 2 316 051 B1**
(45) Veröffentlichungstag und Bekanntmachung des Hinweises auf die Patenterteilung: **11.01.2012**
(21) Anmeldenummer: 08785808.0
(22) Anmeldetag: 28.08.2008
(51) Int. Cl.: G02F 1/163, G06F 1/32, G05B 19/18

(54) **ELEKTRONISCHE ANZEIGEVORRICHTUNG, ANLAGE DER AUTOMATISIERUNGSTECHNIK SOWIE VERFAHREN ZUM BETREIBEN EINER ELEKTRONISCHEN ANZEIGEVORRICHTUNG**
ELECTRONIC DISPLAY APPARATUS, INSTALLATION APPERTAINING TO AUTOMATION TECHNOLOGY, AND METHOD FOR OPERATING AN ELECTRONIC DISPLAY APPARATUS
DISPOSITIF D'AFFICHAGE ÉLECTRONIQUE, INSTALLATION UTILISANT LES TECHNIQUES D'AUTOMATISATION, AINSI QUE PROCÉDÉ D'EXPLOITATION D'UN DISPOSITIF D'AFFICHAGE ÉLECTRONIQUE

(43) Veröffentlichungstag der Anmeldung: 04.05.2011
(73) Patentinhaber: Siemens Aktiengesellschaft, 80333 München (DE)
(72) Erfinder: FRANK, Edgar, 90482 Nürnberg (DE); KOHLER, Benjamin, 90409 Nürnberg (DE); MIDDEL, Jörg, 91448 Emskirchen (DE); RIEDL, Wolfgang, 90459 Nürnberg (DE); STRÖMSDÖRFER, Christian, 90453 Nürnberg (DE); VOLKMANN, Frank, 90475 Nürnberg (DE); WIECZOREK, Michael, 91056 Erlangen (DE); WITTIG, Sebastian, 90552 Oberasbach (DE)
(86) Internationale Anmeldenummer: PCT/EP2008/007209
(87) Internationale Veröffentlichungsnummer: WO 2010/022759

(56) Entgegenhaltungen:
- WO-A-2007/031043
- US-B1- 6 349 221

## Beschreibung

Die Erfindung betrifft eine elektronische Anzeigevorrichtung mit einer Steuereinrichtung und einem durch die Steuereinrichtung abschaltbaren elektronischen Anzeigefeld.

Entsprechende elektronische Anzeigevorrichtungen sind in vielfältiger Form bekannt. Als weit verbreitetes Beispiel hierfür sei ein Laptop genannt. Generell kann die Steuereinrichtung beispielsweise als Mikroprozessor und das elektronische Anzeigefeld beispielsweise in Form eines Flüssigkristall-Bildschirmes (Liquid Crystal Display, LCD) oder eines Dünnschichttransistor-Flüssigkristall-Bildschirmes (Thin Film Transistor Liquid Crystal Display, TFT-LCD) ausgebildet sein. Dabei dient das Abschalten des elektronischen Anzeigefeldes üblicherweise einer Verringerung des Strom- bzw. Energieverbrauchs der elektronischen Anzeigevorrichtung. So ist es beispielsweise für Laptops bekannt, dass das elektronische Anzeigefeld in Form des Bildschirms in einem Standby-Modus abgeschaltet wird.

Aus der Druckschrift US 6,349,221 ist ein elektrochromes Display bekannt, welches abhängig von einer Zustandsmeldung des zugehörigen Geräts (eines Mobiltelefons) in einen von drei Anzeigenzustände geschaltet wird.

Im Rahmen des Betriebs industrieller Fertigungsanlagen, das heißt beispielsweise im Zusammenhang mit Anlagen der Automatisierungstechnik, gewinnt die Senkung des Energieverbrauchs der Anlage sowohl aus ökonomischen als auch als ökologischen Gesichtspunkten zunehmend an Bedeutung. Entsprechende Anlagen weisen üblicherweise eine Vielzahl elektronischer Anzeigevorrichtungen auf, die insbesondere der Anzeige von Zustandsmeldungen der Anlage dienen, und auch als Panels zum Bedienen und Beobachten bezeichnet werden. Im Unterschied zu einer elektronischen Anzeigevorrichtung in Form eines üblichen Laptops besteht bei solchen zur Steuerung und Überwachung eingesetzten elektronischen Anzeigevorrichtungen üblicherweise die Anforderung, dass eingehende Zustandsmeldungen während des Betriebs der Anlage auf der jeweiligen elektronischen Anzeigevorrichtung ständig sichtbar sind, um eine durchgehende Überwachung der Anlage zu ermöglichen und gegebenenfalls schnell erforderliche Maßnahmen ergreifen zu können. Dies führt dazu, dass entsprechende elektronische Anzeigevorrichtungen üblicherweise ständig eingeschaltet sind, da ein technisch häufig grundsätzlich mögliches Abschalten des elektronischen Anzeigefeldes aus Sicherheitsgründen nicht oder nur im Einzelfall zugelassen wird.

Der vorliegenden Erfindung liegt die Aufgabe zugrunde; eine Steuereinrichtung und ein durch die Steuereinrichtung abschaltbares elektronisches Anzeigefeld aufweisende elektronische Anzeigevorrichtung anzugeben, die einen energiesparenden Zustand unterstützt, in dem weiterhin zumindest in einem gewissen Umfang Informationen angezeigt werden können.

Diese Aufgabe wird erfindungsgemäß gelöst durch eine elektronische Anzeigevorrichtung mit einer Steuereinrichtung und einem durch die Steuereinrichtung abschaltbaren elektronischen Anzeigefeld, wobei zusätzlich ein elektrochromes Display vorgesehen ist und das elektrochrome Display von der Steuereinrichtung in unterschiedliche Anzeigezustände schaltbar ist.

Die erfindungsgemäße elektronische Anzeigevorrichtung ist vorteilhaft, da sie es durch ihr zusätzliches elektrochromes Display ermöglicht, dass auch bei abgeschaltetem elektronischem Anzeigefeld Informationen, beispielsweise den Zustand einer überwachten Anlage betreffend, angezeigt werden können. Elektrochrome Displays sind beispielsweise aus den veröffentlichten internationalen Patentanmeldungen WO 2007/071531 A1, WO 2007/071534 A1 sowie WO 2007/003533 A1 bekannt. Dabei weisen elektrochrome Displays den grundlegenden Vorteil auf, dass sie lediglich beim Schalten beziehungsweise beim Ansteuern Energie verbrauchen. Anschließend wird der entsprechende Anzeigezustand von dem elektrochromen Display aufrecht erhalten, ohne dass hierfür weitere Energie benötigt werden würde. Dies bedeutet, dass im Unterschied zu einem sonstigen elektronischen Anzeigefeld eine dauerhafte Anzeige ohne Energieverbrauch möglich ist. Somit kann das elektrochrome Display vorteilhafterweise dafür verwendet werden, im abgeschalteten Zustand des elektronischen Anzeigefeldes zumindest noch in einem gewissen Umfang Informationen darzustellen.

In einer besonders bevorzugten Weiterbildung ist die elektronische Anzeigevorrichtung derart ausgestaltet, dass sich die unterschiedlichen Anzeigezustände hinsichtlich der Farbe des elektrochromen Displays und/oder eines auf dem elektrochromen Display angezeigten Texts und/oder einer auf dem elektrochromen Display dargestellten Grafik unterscheiden. So besteht vorteilhafterweise beispielsweise die Möglichkeit, dass wichtige Informationen, die der elektronischen Anzeigevorrichtung vorliegen, allein anhand der Farbe des elektrochromen Displays dargestellt bzw. signalisiert werden. Dabei ist es beispielsweise denkbar, dass das elektrochrome Display im Falle des Vorliegens eines Alarmzustands in einen Anzeigezustand geschaltet wird, in dem das elektrochrome Display vollständig eine rote Farbe aufweist. Hierdurch wird eine zugleich einfache und deutliche Signalisierung des entsprechenden Zustandes ermöglicht. Darüber hinaus kann bei einer Signalisierung unterschiedlicher Anzeigezustände durch die Farbe des elektrochromen Displays vorteilhafterweise ein vergleichsweise einfach aufgebautes elektrochromes Display verwendet werden, da hierbei im Wesentlichen keine Anforderungen bezüglich der von dem elektrochromen Display bereitgestellten Auflösung bestehen. So kann bei dieser bevorzugten Ausführungsform beispielsweise ein elektrochromes Polymer verwendet werden, dessen Farbe durch eine entsprechende Ansteuerung veränderbar ist. Dies bedeutet, dass der Begriff des elektrochromen Displays im Rahmen der vorliegenden Erfindung auch solche vergleichsweise einfachen und in der Regel daher auch vergleichsweise kostengünstigen Ausführungsformen einer Anzeige unter Verwendung des Phänomens des Elektrochromismus umfasst. Alternativ oder zusätzlich zur Verwendung von sich hinsichtlich der Farbe des elektrochromen Displays unterscheidenden Anzeigezuständen können weiterhin auch Anzeigezustände verwendet werden, die sich hinsichtlich eines auf dem elektrochromen Display angezeigten Texts und/oder einer auf dem elektrochromen Display dargestellten Grafik, etwa in Form eines Icons, unterscheiden.

Grundsätzlich kann das elektrochrome Display innerhalb der elektronischen Anzeigevorrichtung beliebig zu dem elektronischen Anzeigefeld angeordnet sein. Dies bedeutet, dass das elektrochrome Display und das elektronische Anzeigefeld beispielsweise neben- oder übereinander angeordnet sein können. In einer besonders bevorzugten Ausführungsform der elektronischen Anzeigevorrichtung ist das elektrochrome Display in Form eines Rahmens um das elektronische Anzeigefeld angeordnet. Dies bietet den Vorteil, dass durch das elektrochrome Display eine hohe Aufmerksamkeit erzielt werden kann, wobei gleichzeitig eine vergleichsweise Platz sparende Anordnung vorliegt. So ist es beispielsweise denkbar, dass in dem Fall, dass das elektronische Anzeigefeld durch die Steuereinrichtung abgeschaltet wird und gleichzeitig seitens der elektronischen Anzeigevorrichtung ein Alarmzustand bekannt ist, das rahmenförmig um das elektronische Anzeigefeld angeordnete elektrochrome Display in einen Anzeigezustand geschaltet wird, in dem es z.B. eine rote oder eine andere auffällige Farbe aufweist. Ein solcher roter Rahmen um das üblicherweise zur Informationsdarstellung verwendete elektronische Anzeigefeld herum stellt sicher, dass beispielsweise Bedienpersonal einer technischen Anlage auch bei abgeschaltetem elektronischen Anzeigefeld über den vorliegenden Alarmzustand informiert wird. Genauere Informationen über den jeweiligen Alarmzustand sind dabei beispielsweise dadurch zugänglich, dass eine Bedienhandlung an der elektronischen Anzeigevorrichtung vorgenommen wird und hierdurch das elektronische Anzeigefeld wieder eingeschaltet wird.

In einer weiteren besonders bevorzugten Weiterbildung ist die elektronische Anzeigevorrichtung derart ausgestaltet, dass das elektrochrome Display von der Steuereinrichtung in Abhängigkeit davon, ob von der elektronischen Anzeigevorrichtung zumindest eine Zustandsmeldung empfangen worden ist, in unterschiedliche Anzeigezustände schaltbar ist. Dies bietet den Vorteil, dass das Vorliegen einer Zustandsmeldung, die aufgrund des abgeschalteten elektronischen Anzeigefeldes auf diesem nicht sichtbar ist, mittels des elektrochromen Displays angezeigt werden kann.

Weiterhin kann die erfindungsgemäße elektronische Anzeigevorrichtung vorteilhafterweise auch derart ausgebildet sein, dass das elektrochrome Display von der Steuereinrichtung in Abhängigkeit von einer die Art zumindest einer empfangenen Zustandsmeldung klassifizierenden Kategorie in unterschiedliche Anzeigezustände schaltbar ist. Dies bietet den Vorteil, dass Zustandsmeldungen unterschiedlicher Kategorie, die von der elektronischen Anzeigevorrichtung empfangen werden oder empfangen worden sind, hinsichtlich ihrer Kategorie mittels unterschiedlicher Anzeigezustände des elektrochromen Displays anzeigbar sind. Hierbei ist es beispielsweise möglich, Zustandsmeldungen, die einen ordnungsgemäßen Betrieb einer Anlage anzeigen und Alarm- beziehungsweise Fehlermeldungen, die das Auftreten unvorhergesehener Ereignisse anzeigen, in unterschiedliche Kategorien zu klassifizieren. So ist es beispielsweise denkbar, dass eine eingegangene beziehungsweise vorliegende Zustandsmeldung, die einen reinen Informationscharakter aufweist, durch eine gelbe Farbe des elektrochromen Displays angezeigt wird, während eine Zustandsmeldung, die einen Alarm oder einen Fehler signalisiert, durch eine rote Farbe des elektrochromen Displays signalisiert wird. Eine entsprechende Klassifizierung empfangener Zustandsmeldungen kann dabei beispielsweise anhand einer entsprechenden Kennung der Zustandsmeldungen erfolgen. So ist es beispielsweise möglich, dass Alarmmeldungen durch das Setzen eines bestimmten Bits oder einen definierten Textstring gekennzeichnet werden.

In einer besonders bevorzugten Weiterbildung der elektronischen Anzeigevorrichtung ist die Steuereinrichtung zum Kategorisieren der zumindest einen empfangenen Zustandsmeldung ausgebildet. Dies bedeutet, dass die Steuereinrichtung in der Lage ist, die Kategorie empfangener Zustandsmeldungen zu erkennen. Dies kann beispielsweise anhand einer Analyse der empfangenden Zustandsmeldung und/oder anhand eines Vergleichs zumindest eines Teils der Zustandsmeldung mit in einer Speichereinrichtung abgelegten Referenzdaten erfolgen.

Vorteilhafterweise kann die elektronische Anzeigevorrichtung auch derart ausgestaltet sein, dass das elektrochrome Display von der Steuereinrichtung in einen anderen Anzeigezustand schaltbar ist, sofern bei abgeschaltetem elektronischem Anzeigefeld von der elektronischen Anzeigevorrichtung zumindest eine Zustandsmeldung mit gegenüber einer früheren Zustandsmeldung geänderter Kategorie empfangen wird. Hierdurch wird es vorteilhafterweise ermöglicht, dass auch bei abgeschaltetem elektronischen Anzeigefeld eine Änderung des Anzeigezustands des elektrochromen Displays möglich ist. Dies kann beispielsweise den Fall betreffen, dass das elektronische Anzeigefeld in einem Zustand abgeschaltet wurde, in dem der elektronischen Anzeigevorrichtung keine Zustandsmeldung vorlag. Sofern nun eine entsprechende Zustandsmeldung, etwa in Form einer Alarmmeldung, von der elektronischen Anzeigevorrichtung empfangen wird, so besteht vorteilhafterweise die Möglichkeit, den Anzeigezustand des elektrochromen Displays, beispielsweise durch eine Änderung der Farbe desselben, zu ändern. Somit ist vorteilhafterweise ein Wiedereinschalten des elektronischen Anzeigefeldes erst dann erforderlich, wenn eine genauere Untersuchung eines aufgetretenen Fehlers sowie gegebenenfalls eine Bedien- oder Eingabehandlung an der elektronischen Anzeigevorrichtung erfolgen soll.

In einer weiteren besonders bevorzugten Ausführungsform der erfindungsgemäßen elektronischen Anzeigevorrichtung weist die elektronische Anzeigevorrichtung zumindest eine Eingabevorrichtung auf und ist weiterhin die Steuereinrichtung zum Abschalten des elektronischen Anzeigefeldes vorgesehen, sofern von der zumindest einen Eingabevorrichtung über eine definierte Zeitdauer keine Bedienhandlung registriert wird. Dies ist vorteilhaft, da somit die elektronische Anzeigevorrichtung nur in solchen Situationen in einen energiesparenden Modus geschaltet wird, in denen über eine definierte Zeitdauer von beispielsweise 10 Minuten an einer Eingabevorrichtung der elektronischen Anzeigevorrichtung keine Bedienhandlung registriert worden ist. Bei einer entsprechenden Eingabevorrichtung kann es sich hierbei beispielsweise um eine Tastatur oder eine Computer-Maus handeln.

Grundsätzlich kann es sich bei der elektronischen Anzeigevorrichtung um eine in beliebigen Bereichen und zu einem beliebigen Zweck eingesetzte Vorrichtung handeln. In einer besonders bevorzugten Ausführungsform der erfindungsgemäßen elektronischen Anzeigevorrichtung ist die elektronische Anzeigevorrichtung ein Panel zum Bedienen und Beobachten einer Anlage der Automatisierungstechnik. Dies ist vorteilhaft, da insbesondere bei solchen Panels ein vollständiges Abschalten eines elektronischen Anzeigefeldes bislang üblicherweise nicht möglich ist, da aus Sicherheitsgründen zumindest den Zustand eines überwachten Prozesses oder einer überwachten Komponente charakterisierende Daten beziehungsweise Informationen anzuzeigen sind. Dies wird erfindungsgemäß durch das elektrochrome Display jedoch gerade ermöglicht, so dass ein energiesparender Standby-Zustand auch für Panels zum Bedienen und Beobachten einer Anlage der Automatisierungstechnik realisierbar ist.

Bei dem elektronischen Anzeigefeld kann es sich um ein Anzeigefeld unter Verwendung einer beliebigen, für sich bekannten Technologie handeln. Dies umfasst beispielsweise Anzeigefelder in Form konventioneller Bildschirme mit Kathodenstrahlröhren. In einer besonders bevorzugten Ausführungsform der erfindungsgemäßen elektronische Anzeigevorrichtung handelt es sich bei dem elektronischen Anzeigefeld um einen Flüssigkristall-Bildschirm, einen Dünnschichttransistor-Flüssigkristall-Bildschirm, einen Plasmabildschirm oder einen Bildschirm unter Verwendung organischer Leuchtdioden. Hierbei handelt es sich vorteilhafterweise um häufig verwendete Formen elektronischer Anzeigefelder, die daher auch vergleichsweise kostengünstig verfügbar sind.

Die Erfindung umfasst darüber hinaus eine Anlage der Automatisierungstechnik mit zumindest einer erfindungsgemäßen elektronischen Anzeigevorrichtung beziehungsweise zumindest einer der zuvor beschriebenen bevorzugten Weiterbildungen der erfindungsgemäßen elektronischen Anzeigevorrichtung. Eine solche Anlage ist vorteilhaft, da sie gegenüber herkömmlichen Anlagen eine Reduzierung des Strom- beziehungsweise Energieverbrauchs der Anlage ermöglicht.

Die Erfindung betrifft weiterhin ein Verfahren zum Betreiben einer elektronischen Anzeigevorrichtung.

Hinsichtlich des Verfahrens liegt der vorliegenden Erfindung die Aufgabe zugrunde, ein Verfahren zum Betreiben einer elektronischen Anzeigevorrichtung anzugeben, das es auch in einem energiesparenden Zustand der elektronischen Anzeigevorrichtung ermöglicht, weiterhin zumindest in einem gewissen Umfang Informationen anzuzeigen.

Diese Aufgabe wird erfindungsgemäß gelöst durch ein Verfahren zum Betreiben einer elektronischen Anzeigevorrichtung mit einer Steuereinrichtung, einem elektronischen Anzeigefeld sowie einem elektrochromen Display mit den folgenden Schritten:
- Schalten des elektrochromen Displays in einen von mehreren verfügbaren Anzeigezuständen durch die Steuereinrichtung und
- Abschalten des elektronischen Anzeigefeldes durch die Steuereinrichtung.

Die Vorteile des erfindungsgemäßen Verfahrens entsprechen im Wesentlichen denjenigen der erfindungsgemäßen elektronischen Anzeigevorrichtung, so dass diesbezüglich auf die betreffenden vorstehenden Ausführungen verwiesen wird. Gleiches gilt hinsichtlich der im Folgenden aufgeführten bevorzugten Weiterbildungen des erfindungsgemäßen Verfahrens mit Hinblick auf die zuvor beschriebenen entsprechenden bevorzugten Weiterbildungen der erfindungsgemäßen elektronischen Anzeigevorrichtung.

Vorteilhafterweise ist das erfindungsgemäße Verfahren derart ausgestaltet, dass durch das Schalten des elektrochromen Displays in einen Anzeigezustand die Farbe des elektrochromen Displays eingestellt wird und/oder unterschiedliche Texte und/oder unterschiedliche grafische Darstellungen auf dem elektrochromen Display zur Anzeige gebracht werden.

Weiterhin kann das erfindungsgemäße Verfahren vorteilhafterweise auch derart ausgeprägt sein, dass ein in Form eines Rahmens um das elektronische Anzeigefeld angeordnetes elektrochromes Display geschaltet wird.

Vorzugsweise kann das erfindungsgemäße Verfahren auch derart ablaufen, dass das elektrochrome Display von der Steuereinrichtung in Abhängigkeit davon, ob von der elektronischen Anzeigevorrichtung zumindest eine Zustandsmeldung empfangen worden ist, in unterschiedliche Anzeigezustände geschaltet wird.

In einer besonders bevorzugten Weiterbildung ist das erfindungsgemäße Verfahren derart ausgestaltet, dass das elektrochrome Display von der Steuereinrichtung in Abhängigkeit von einer die Art zumindest einer empfangenen Zustandsmeldung klassifizierenden Kategorie in unterschiedliche Anzeigezustände geschaltet wird.

In einer weiteren besonders bevorzugten Ausführungsform des erfindungsgemäßen Verfahrens wird die zumindest eine Zustandsmeldung durch die elektronische Anzeigevorrichtung kategorisiert.

In einer besonders bevorzugten Ausgestaltung ist das erfindungsgemäße Verfahren derart weitergebildet, dass das elektrochrome Display in einen anderen Anzeigezustand geschaltet wird, sofern bei abgeschaltetem elektronischem Anzeigefeld von der elektronischen Anzeigevorrichtung zumindest eine Zustandsmeldung mit gegenüber einer früheren Zustandsmeldung geänderter Kategorie empfangen wird.

Vorzugsweise kann das erfindungsgemäße Verfahren auch derart ausgestaltet sein, dass das elektronische Anzeigefeld abgeschaltet wird, sofern von der elektronischen Anzeigevorrichtung über eine definierte Zeitdauer keine Bedienhandlung registriert wird.

In einer weiteren bevorzugten Ausführungsform des erfindungsgemäßen Verfahrens wird als elektronische Anzeigevorrichtung ein Panel zum Bedienen und Beobachten einer Anlage der Automatisierungstechnik verwendet.

Im Folgenden wird die Erfindung anhand von Ausführungsbeispielen näher erläutert. Hierzu zeigt
- Figur 1: in einer schematischen Skizze ein Ausführungsbeispiel der erfindungsgemäßen elektronischen Anzeigevorrichtung,
- Figur 2: eine schematische Darstellung zur Verdeutlichung eines ersten Ausführungsbeispiels des erfindungsgemäßen Verfahrens, bei dem das elektrochrome Display in einen ersten Anzeigezustand geschaltet wird,
- Figur 3: eine schematische Darstellung zur Verdeutlichung eines zweiten Ausführungsbeispiels des erfindungsgemäßen Verfahren, bei dem das elektrochrome Display in einen zweiten Anzeigezustand geschaltet wird und
- Figur 4: eine schematische Darstellung zur Verdeutlichung eines dritten Ausführungsbeispiels des erfindungsgemäßen Verfahrens, bei dem das elektrochrome Display in einen dritten Anzeigezustand geschaltet wird.

Aus Gründen der Übersichtlichkeit werden in den Figuren für gleiche oder funktionsgleiche Komponenten identische Bezugszeichen verwendet.

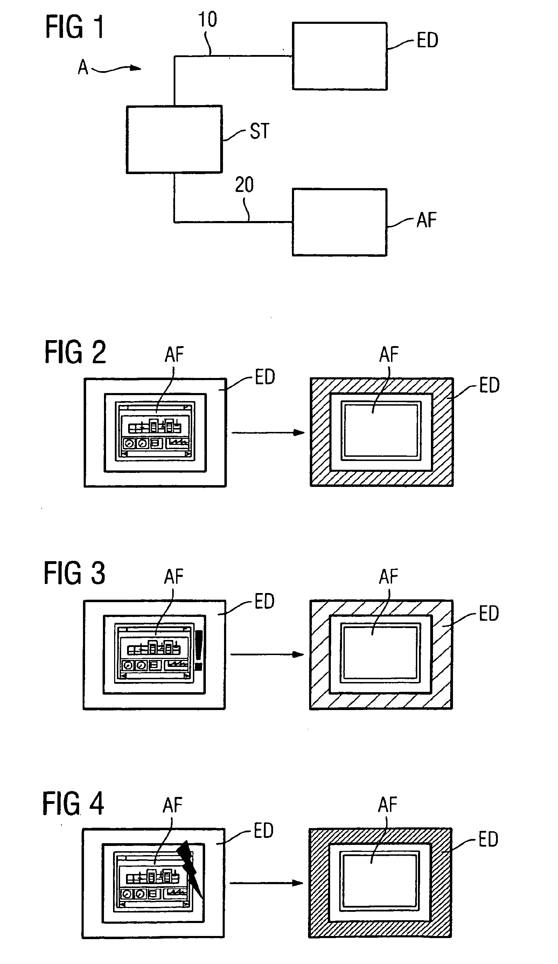

Figur 1 zeigt in einer schematischen Darstellung ein Ausführungsbeispiel der erfindungsgemäßen elektronischen Anzeigevorrichtung. Dargestellt ist eine elektronische Anzeigevorrichtung A, bei der es sich im Rahmen des im Folgenden beschriebenen Ausführungsbeispiels um ein Panel zum Bedienen und Beobachten einer Anlage der Automatisierungstechnik handeln soll. Die elektronische Anzeigevorrichtung A weist ein elektronisches Anzeigefeld AF sowie eine Steuereinrichtung ST auf. Dabei ist die Steuereinrichtung ST zum Abschalten des elektronischen Anzeigefeldes AF ausgebildet, so dass es beispielsweise ermöglicht wird, dass für den Fall, dass von einer in Figur 1 nicht dargestellten Eingabevorrichtung der elektronischen Anzeigevorrichtung A über eine definierte Zeitdauer keine Bedienhandlung registriert wird, eine Abschaltung des elektronischen Anzeigefeldes AF durch die Steuereinrichtung ST vorgenommen wird. Hierdurch wird insbesondere der Strom- beziehungsweise Energieverbrauch der elektronischen Anzeigevorrichtung A reduziert sowie darüber hinaus gegebenenfalls die Lebensdauer des elektronischen Anzeigefeldes AF erhöht.

Bei dem elektronischen Anzeigefeld AF handelt es sich um ein Anzeigefeld gängigen Typs, wie beispielsweise einen Flüssigkristall-Bildschirm (LCD), einen Dünnschichttransistor-Flüssigkristall-Bildschirm (TFT-LCD) oder einen Plasmabildschirm.

Um nun jedoch auch im ausgeschalteten Zustand des elektronischen Anzeigefeldes AF der elektronischen Anzeigevorrichtung A zumindest im gewissen Umfang Informationen darstellen zu können, weist die elektronische Anzeigevorrichtung A darüber hinaus ein elektrochromes Display ED auf. Wenn nun die elektronische Anzeigevorrichtung A in einen Strom sparenden Zustand geschaltet werden soll, so wird in einem ersten Verfahrensschritt 10 das elektrochrome Display ED zunächst durch die Steuereinrichtung ST in einen von mehreren verfügbaren Anzeigezuständen geschaltet. Anschließend wird das elektronische Anzeigefeld AF durch die Steuereinrichtung ST in einem Verfahrensschritt 20 abgeschaltet.

Vorteilhafterweise signalisiert der jeweilige Anzeigezustand des elektrochromen Displays ED nun weiterhin eine Information, bei der es sich beispielsweise um die Art zumindest einer Zustandsmeldung handeln kann, die von der elektronischen Anzeigevorrichtung A vor oder auch nach dem Abschalten des elektronischen Anzeigefeldes AF empfangen worden sein kann. Dies bedeutet, dass auch bei abgeschaltetem elektronischem Anzeigefeld AF weiterhin eine Zustandsinformation durch das elektrochrome Display ED der elektronischen Anzeigevorrichtung A anzeigbar ist. Hierzu ist die Steuereinrichtung ST vorteilhafterweise zum Kategorisieren der zumindest einen empfangenen Zustandsmeldung ausgebildet. Dies bedeutet, dass beispielsweise normale, unkritische Zustandsmeldungen von kritischen Alarmmeldungen unterschieden werden können. Die Verwendung des elektrochromen Displays ED zur Anzeige ob und gegebenenfalls in welche Kategorie eine Zustandsmeldung vorliegt, ist vorteilhaft, da das elektrochrome Display ED nach seiner Ansteuerung, das heißt nach seinem Schalten in einen der verfügbaren Anzeigezustände, keinen Strom und somit auch keine Energie mehr benötigt.

Figur 2 zeigt eine schematische Darstellung zur Verdeutlichung eines ersten Ausführungsbeispiels des erfindungsgemäßen Verfahrens, bei dem das elektrochrome Display in einen ersten Anzeigezustand geschaltet wird. Dargestellt ist eine Vorderansicht eines elektronischen Anzeigefeldes AF einer elektronischen Anzeigevorrichtung A. Darüber hinaus ist ein elektrochromes Display ED erkennbar, das in Form eines Rahmens um das elektronische Anzeigefeld AF ausgebildet ist. In der Darstellung im linken Teil der Figur 2 befindet sich das elektronische Anzeigefeld AF in einem aktiven Zustand, das heißt das elektronische Anzeigefeld AF ist eingeschaltet. Dies bedeutet, dass beispielsweise Prozesswerte eines Automatisierungssystems in textueller und/oder grafischer Form angezeigt werden.

Sofern nun das elektronische Anzeigefeld AF etwa aufgrund des Ausbleibens von Bedienhandlungen, die beispielsweise mittels einer Eingabevorrichtung in Form einer Tastatur oder einer Maus vorgenommen werden könnten, oder auch aufgrund des Ausbleibens von Zustandsmeldungen von Komponenten des Automatisierungssystems, bei denen es sich beispielsweise um Aktoren oder Sensoren handeln kann, in einen Standby-Zustand geschaltet werden soll, so geschieht dies derart, dass zunächst das elektrochrome Display ED in einen von mehreren verfügbaren Anzeigezuständen geschaltet wird. Dies ist auf der rechten Seite der Figur 2 durch eine entsprechende Schraffur des elektrochromen Displays ED in Form des Rahmens dargestellt, wobei angenommen sei, dass seitens der elektronischen Anzeigevorrichtung A anhand der Art beziehungsweise Kategorie der zumindest einen Zustandsmeldung erkannt wird, dass sich das mittels der elektronischen Anzeigevorrichtung überwachte System in einem Normalzustand befindet. Daher wird das elektrochrome Display ED in dem beschriebenen Ausführungsbeispiel in einen Anzeigezustand geschaltet, in dem das elektrochrome Display ED eine grüne Farbe aufweist. Hierdurch wird auf besonders einfache Art und Weise signalisiert, dass eine weitergehende Beobachtung oder Analyse der mittels der elektronischen Anzeigevorrichtung A verfügbaren Zustandsmeldungen nicht erforderlich ist. Dies ist Voraussetzung dafür, dass im Folgenden das elektronische Anzeigefeld AF durch eine in Figur 2 nicht dargstellte Steuereinrichtung ST der elektronischen Anzeigevorrichtung A abgeschaltet werden kann. Hierdurch wird ein gegenüber der auf der linken Seite der Figur 2 dargstellten Situation energiesparenderer Zustand eingenommen, wobei vorteilhafterweise gleichzeitig ein möglicherweise sicherheitskritischer Informationsverlust seitens des Bedienpersonals der Anlage der Automatisierungstechnik vermieden wird.

Figur 3 zeigt eine schematische Darstellung zur Verdeutlichung eines zweiten Ausführungsbeispiels des erfindungsgemäßen Verfahrens, bei dem das elektrochrome Display in einen zweiten Anzeigezustand geschaltet wird. Hierbei entspricht die Darstellung derjenigen der Figur 2, mit dem einzigen Unterschied, dass, wie durch das Ausrufezeichen in dem linken Teil der Figur 2 angedeutet, eine Zustandsmeldung vorliegt, die eine Information über den aktuellen Zustand der Anlage beinhaltet. Da es sich hierbei nicht um eine sicherheitskritische Zustandsmeldung handelt, wird das elektrochrome Display ED im Rahmen des beschriebenen Ausführungsbeispiels beim beziehungsweise vor dem Abschalten des elektronischen Anzeigefeldes AF in einen Anzeigezustand geschaltet, in dem es eine gelbe Farbe aufweist. Ebenso könnte für den Fall, dass sich das elektrochrome Display ED bereits in dem Zustand des rechten Teils der Figur 2 befindet, das heißt eine grüne Farbe aufweist, bei Eingehen einer Zustandsmeldung bei der elektronischen Anzeigevorrichtung A ein Umschalten des Anzeigezustandes des elektrochromen Displays ED derart erfolgen, dass die Farbe des rahmenförmigen elektrochromen Displays ED von grün nach gelb geändert wird.

Figur 4 zeigt eine schematische Darstellung zur Verdeutlichung eines dritten Ausführungsbeispiels des erfindungsgemäßen Verfahrens, bei dem das elektrochrome Display in einen dritten Anzeigezustand geschaltet wird. Im Unterschied zur Figur 3 soll es sich bei einer in Figur 4 eingehenden beziehungsweise vorliegenden Zustandsmeldung um eine Alarm- bzw. Fehlermeldung handeln. Dies ist im linken Teil der Figur 4 durch ein entsprechendes Symbol in Form eines Blitzes angedeutet. Sofern das elektronische Anzeigefeld AF nun abgeschaltet werden soll bzw. abgeschaltet ist, so wird das elektrochrome Display ED in einen Anzeigezustand geschaltet, in dem es eine rote Farbe aufweist. Hierdurch erfolgt eine besonders einfache und auffällige Signalisierung des vorliegenden Alarmzustandes bzw. der vorliegenden Alarmzustandsmeldung.

Es sei darauf hingewiesen, dass die unterschiedlichen Anzeigezustände alternativ oder zusätzlich auch durch unterschiedlichen auf dem elektrochromen Display ED angezeigten Text und/oder unterschiedliche grafische Darstellungen auf dem elektrochromen Display ED realisiert werden könnten.

Entsprechend den vorstehend beschriebenen Ausführungsbeispielen ermöglicht es das elektrochrome Display ED der elektronischen Anzeigevorrichtung A somit vorteilhafterweise, Zustandsmeldungen einer überwachten Anlage oder eines überwachten Prozesses auch in einer Situation widerzuspiegeln, in der die elektronische Anzeigevorrichtung A in Form des Panels durch das Abschalten des elektronischen Anzeigefeldes AF in einen Strom sparenden Zustand versetzt ist. Hierdurch wird sichergestellt, dass wichtige Zustandsmeldungen beziehungsweise Zustandsinformationen nicht verloren gehen, sondern auch bei abgeschaltetem elektronischem Anzeigefeld AF zumindest hinsichtlich ihrer Kategorie signalisiert werden können. Da das elektrochrome Display ED nur jeweils einmalig bei seiner Ansteuerung Strom benötigt, ist der Energieverbrauch hierbei vorteilhafterweise auf ein Minimum reduziert.

## Patentansprüche

1. Verfahren zum Betreiben einer elektronischen Anzeigevorrichtung (A) mit einer Steuereinrichtung (ST), einem elektronischen Anzeigefeld (AF) sowie einem elektrochromen Display (ED) mit den folgenden Schritten:
- Schalten des elektrochromen Displays (ED) in einen von mehreren verfügbaren Anzeigezuständen durch die Steuereinrichtung (ST) und
- Abschalten des elektronischen Anzeigefeldes (AF) durch die Steuereinrichtung (ST)
wobei durch das Schalten des elektrochromen Displays (ED) in einen Anzeigezustand die Farbe des elektrochromen Displays (ED) eingestellt wird und/oder unterschiedliche Texte und/oder unterschiedliche grafische Darstellungen auf dem elektrochromen Display (ED) zur Anzeige gebracht werden,
**dadurch gekennzeichnet, dass**
das elektrochrome Display (ED) von der Steuereinrichtung (ST) in Abhängigkeit von einer die Art zumindest einer von einer Anlage der Automatisierungstechnik empfangenen Zustandsmeldung klassifizierenden Kategorie in unterschiedliche Anzeigezustände geschaltet wird.

2. Verfahren nach Anspruch 1,
**dadurch gekennzeichnet, dass**
ein in Form eines Rahmens um das elektronische Anzeigefeld (AF) angeordnetes elektrochromes Display (ED) geschaltet wird.

3. Verfahren nach einem der Ansprüche 1 oder 2,
**dadurch gekennzeichnet, dass**
das elektrochrome Display (ED) von der Steuereinrichtung (ST) in Abhängigkeit davon, ob von der elektronischen Anzeigevorrichtung (AF) zumindest eine Zustandsmeldung empfangen worden ist, in unterschiedliche Anzeigezustände geschaltet wird.

4. Verfahren nach einem der vorherigen Ansprüche,
**dadurch gekennzeichnet, dass**
die zumindest eine Zustandsmeldung durch die elektronische Anzeigevorrichtung (A) kategorisiert wird.

5. Verfahren nach einem der Ansprüche 3 oder 4,
**dadurch gekennzeichnet, dass**
das elektrochrome Display (ED) in einen anderen Anzeigezustand geschaltet wird, sofern bei abgeschaltetem elektronischem Anzeigefeld (AF) von der elektronischen Anzeigevorrichtung (A) zumindest eine Zustandsmeldung mit gegenüber einer früheren Zustandsmeldung geänderter Kategorie empfangen wird.

6. Verfahren nach einem der Ansprüche 1 bis 5,
**dadurch gekennzeichnet, dass**
das elektronische Anzeigefeld (AF) abgeschaltet wird, sofern von der elektronischen Anzeigevorrichtung (A) über eine definierte Zeitdauer keine Bedienhandlung registriert wird.

7. Verfahren nach einem der Ansprüche 1 bis 6,
**dadurch gekennzeichnet, dass**
als elektronische Anzeigevorrichtung (A) ein Panel zum Bedienen und Beobachten einer Anlage der Automatisierungstechnik verwendet wird.

8. Elektronische Anzeigevorrichtung (A) mit einer Steuereinrichtung (ST) und einem durch die Steuereinrichtung (ST) abschaltbaren elektronischen Anzeigefeld (AF), zur Ausführung des Verfahrens gemäß einem der Patentansprüche 1 bis 7,
bei dem
- zusätzlich ein elektrochromes Display (ED) vorgesehen ist und
- das elektrochrome Display (ED) von der Steuereinrichtung (ST) in unterschiedliche Anzeigezustände schaltbar ist und sich die unterschiedlichen Anzeigezustände hinsichtlich der Farbe des elektrochromen Displays (ED) und/oder eines auf dem elektrochromen Display (ED) angezeigten Texts und/oder einer auf dem elektrochromen Display (ED) dargestellten Grafik unterscheiden,
**dadurch gekennzeichnet, dass**
das elektrochrome Display (ED) von der Steuereinrichtung (ST) in Abhängigkeit von einer die Art zumindest einer von einer Anlage der Automatisierungstechnik empfangenen Zustandsmeldung klassifizierenden Kategorie in unterschiedliche Anzeigezustände schaltbar ist.

9. Elektronische Anzeigevorrichtung nach Anspruch 8,
**dadurch gekennzeichnet, dass**
das elektrochrome Display (ED) in Form eines Rahmens um das elektronische Anzeigefeld (AF) angeordnet ist.

10. Elektronische Anzeigevorrichtung nach einem der vorangehenden Ansprüche 8 oder 9,
**dadurch gekennzeichnet, dass**
das elektrochrome Display (ED) von der Steuereinrichtung (ST) in Abhängigkeit davon, ob von der elektronischen Anzeigevorrichtung (A) zumindest eine Zustandsmeldung empfangen worden ist, in unterschiedliche Anzeigezustände schaltbar ist.

11. Elektronische Anzeigevorrichtung nach einem der vorangehenden Ansprüche 8 bis 10,
**dadurch gekennzeichnet, dass**
die Steuereinrichtung (ST) zum Kategorisieren der zumindest einen empfangenen Zustandsmeldung ausgebildet ist.

12. Elektronische Anzeigevorrichtung nach einem der vorangehenden Ansprüche 8 bis 11,
**dadurch gekennzeichnet, dass**
das elektrochrome Display (ED) von der Steuereinrichtung (ST) in einen anderen Anzeigezustand schaltbar ist, sofern bei abgeschaltetem elektronischem Anzeigefeld (AF) von der elektronischen Anzeigevorrichtung (A) zumindest eine Zustandsmeldung mit gegenüber einer früheren Zustandsmeldung geänderter Kategorie empfangen wird.

13. Elektronische Anzeigevorrichtung nach einem der vorangehenden Ansprüche 8 bis 12,
**dadurch gekennzeichnet, dass**
- die elektronische Anzeigevorrichtung (A) zumindest eine Eingabevorrichtung aufweist und
- die Steuereinrichtung (ST) zum Abschalten des elektronischen Anzeigefeldes (AF) vorgesehen ist, sofern von der zumindest einen Eingabevorrichtung über eine definierte Zeitdauer keine Bedienhandlung registriert wird.

14. Elektronische Anzeigevorrichtung nach einem der vorangehenden Ansprüche 8 bis 13,
**dadurch gekennzeichnet, dass**
die elektronische Anzeigevorrichtung (A) ein Panel zum Bedienen und Beobachten einer Anlage der Automatisierungstechnik ist.

15. Elektronische Anzeigevorrichtung nach einem der vorangehenden Ansprüche 8 bis 14,
**dadurch gekennzeichnet, dass**
das elektronische Anzeigefeld (AF) ein Flüssigkristall-Bildschirm, ein Dünnschichttransistor-Flüssigkristall-Bildschirm, ein Plasmabildschirm oder ein Bildschirm unter Verwendung organischer Leuchtdioden ist.

16. Anlage der Automatisierungstechnik mit zumindest einer elektronischen Anzeigevorrichtung (A) nach einem der vorangehenden Ansprüche.

## Claims

1. Method for operating an electronic display apparatus (A) with a control device (ST), an electronic display panel (AF) and an electrochromic display (ED) with the following steps:
- switching of the electrochromic display (ED) to one of a multiplicity of available display states by the control device (ST) and
- deactivation of the electronic display panel (AF) by the control device (ST),
wherein switching the electrochromic display (ED) to a display state sets the colour of the electrochromic display (ED) and/or different texts and/or different graphical representations are shown on the electrochromic display (ED),
**characterised in that**
the electrochromic display (ED) can be switched to different display states by the control device (ST) depending on a category classifying the type of at least one status message received from an installation appertaining to automation technology.

2. Method according to claim 1
**characterised in that**
an electrochromic display (ED) in the form of a frame around the electronic display panel (AF) is swtiched.

3. Method according to one of claims 1 or 2,
**characterised in that**
the electrochromic display (ED) can be switched to different display states by the control device (ST) depending on whether at least one status message has been received by the electronic display apparatus (AF).

4. Method according to one of the preceeding claims,
**characterised in that**
the at least one status message is categorised by the electronic display apparatus (A).

5. Method according to one of claims 3 or 4,
**characterised in that**
the electrochromic display (ED) is switched to a different display state, insofar as with the electronic display panel (AF) deactivated, at least one status message with a changed category compared to an earlier status message is received by the electronic display apparatus (A).

6. Method according to one of claims 1 to 5,
**characterised in that**
the electronic display panel (AF) is deactivated, insofar as no operating action is registered by the electronic display apparatus (A) over a defined period of time.

7. Method according to one of claims 1 to 6,
**characterised in that**
a panel for operating and observing an installation appertaining to automation technology is used as the electronic display apparatus (A).

8. Electronic display apparatus (A) with a control device (ST) and an electronic display panel (AF) that can be deactivated by means of the control device (ST), for carrying out the method according to one of claims 1 to 7,
wherein
- an electrochromic display (ED) is additionally provided and
- the electrochromic display (ED) can be switched to different display states by the control device (ST) and
the different display states differ in respect of the colour of the electrochromic display (ED) and/or of text displayed on the electrochromic display (ED) and/or a graphic represented on the electrochromic display (ED),
**characterised in that**
the electrochromic display (ED) can be switched to different display states by the control device (ST) depending on a category classifying the type of at least one status message received from an installation appertaining to automation technology.

9. Electronic display apparatus according to claim 8
**characterised in that**
the electrochromic display (ED) is arranged in the form of a frame around the electronic display panel (AF).

10. Electronic display apparatus according to one of the preceeding claims 8 or 9,
**characterised in that**
the electrochromic display (ED) can be switched to different display states by the control device (ST) depending on whether at least one status message has been received by the electronic display apparatus (A).

11. Electronic display apparatus according to one of the preceeding claims 8 to 10,
**characterised in that**
the control device (ST) is embodied for the categorisation of the at least one received status message.

12. Electronic display apparatus according to one of the preceeding claims 8 to 11,
**characterised in that**
the electrochromic display (ED) can be switched to a different display state by the control device (ST), insofar as with the electronic display panel (AF) deactivated, at least one status message with a changed category compared to an earlier status message is received by the electronic display apparatus (A).

13. Electronic display apparatus according to one of the preceeding claims 8 to 12,
**characterised in that**
- the electronic display apparatus (A) has at least one input device and
- the control device (ST) is provided to deactivate the electronic display panel (AF), insofar as no operating action is registered by the at least one input device over a defined period of time.

14. Electronic display apparatus according to one of the preceeding claims 8 to 13,
**characterised in that**
the electronic display apparatus (A) is a panel for operating and observing an installation appertaining to automation technology.

15. Electronic display apparatus according to one of the preceeding claims 8 to 14,
**characterised in that**
the electronic display panel (AF) is a liquid crystal screen, a thin film transistor liquid crystal display screen, a plasma screen or a screen employing organic LEDs.

16. Installation appertaining to automation technology with at least one electronic display apparatus (A) according to one of the preceeding claims.

## Revendications

1. Procédé pour faire fonctionner un dispositif d'affichage électronique (A) avec un dispositif de commande (ST), un champ d'affichage électronique (AF) et un écran électrochrome (ED), comportant les étapes suivantes :
- commutation de l'écran électrochrome (ED) dans l'un de plusieurs états d'affichage disponibles par le dispositif de commande (ST) et
- coupure du champ d'affichage électronique (AF) par le dispositif de commande (ST),
la commutation de l'écran électrochrome (ED) dans un état d'affichage permettant le réglage de la couleur de l'écran électrochrome (ED) et/ou l'affichage de différents textes et/ou de différentes représentations graphiques sur l'écran électrochrome (ED) ;
**caractérisé en ce que**
l'écran électrochrome (ED) est commuté dans différents états d'affichage par le dispositif de commande (ST) en fonction d'une catégorie qui classe le type d'au moins un message d'état reçu par une installation de la technique d'automatisation.

2. Procédé selon la revendication 1, **caractérisé en ce qu'**un écran électrochrome (ED) agencé en forme de cadre autour du champ d'affichage électronqiue (AF) est commuté.

3. Procédé selon l'une des revendications 1 ou 2, **caractérisé en ce que** l'écran électrochrome (ED) est commuté dans différents états d'affichage par le dispositif de commande (ST) en fonction du fait qu'au moins un message d'état a ou non été reçu par le dispositif d'affichage électronique (AF).

4. Procédé selon l'une des revendications précédentes, **caractérisé en ce que** l'au moins un message d'état est catégorisé par le dispositif d'affichage électronique (A).

5. Procédé selon l'une des revendications précédentes 3 ou 4, **caractérisé en ce que** l'écran électrochrome (ED) est commuté dans un autre état d'affichage dans la mesure où, le champ d'affichage électronique (AF) étant coupé, au moins un message d'état avec une catégorie modifiée par rapport à un message d'état antérieur est reçu par le dispositif d'affichage électronique (A).

6. Procédé selon l'une des revendications 1 à 5, **caractérisé en ce que** le champ d'affichage électronique (AF) est coupé dans la mesure où aucune opération de commande n'est enregistrée par le dispositif d'affichage électronique (A) pendant une durée de temps définie.

7. Procédé selon l'une des revendications 1 à 6, **caractérisé en ce qu'**est utilisé, en tant que dispositif d'affichage électronique (A), un tableau de commande et de surveillance d'une installation de la technique d'automatisation.

8. Dispositif d'affichage électronique (A) avec un dispositif de commande (ST) et un champ d'affichage électronique (AF) pouvant être coupé par le dispositif de commande (ST), pour exécuter le procédé selon l'une des revendications 1 à 7, dans lequel :
- un écran électrochrome (ED) est additionnellement prévu et
- l'écran électrochrome (ED) peut être commuté par le dispositif de commande (ST) pour passer dans différents états d'affichage et
les différents états d'affichage diffèrent au niveau de la couleur de l'écran électrochrome (ED) et/ou d'un texte affiché sur l'écran électrochrome (ED) et/ou d'un graphique représenté sur l'écran électrochrome (ED), **caractérisé en ce que** l'écran électrochrome (ED) peut être commuté dans différents états d'affichage par le dispositif de commande (ST) en fonction d'une catégorie qui classe le type d'au moins un message d'état reçu par une installation de la technique d'automatisation.

9. Dispositif d'affichage électronique selon la revendication 8, **caractérisé en ce que** l'écran électrochrome (ED) est agencé en forme de cadre autour du champ d'affichage électronique (AF).

10. Dispositif d'affichage électronique selon l'une des revendications précédentes 8 ou 9, **caractérisé en ce que** l'écran électrochrome (ED) peut être commuté dans différents états d'affichage par le dispositif de commande (ST) en fonction du fait qu'au moins un message d'état a ou non été reçu par le dispositif d'affichage électronique (A).

11. Dispositif d'affichage électronique selon l'une des revendications précédentes 8 à 10, **caractérisé en ce que** le dispositif de commande (ST) est réalisé pour catégoriser l'au moins un message d'état reçu.

12. Dispositif d'affichage électronique selon l'une des revendications précédentes 8 à 11, **caractérisé en ce que** l'écran électrochrome (ED) peut être commuté dans un autre état d'affichage par le dispositif de commande (ST) dans la mesure où, le champ d'affichage électronique (AF) étant coupé, au moins un message d'état avec une catégorie modifiée par rapport à un message d'état antérieur est reçu par le dispositif d'affichage électronique (A).

13. Dispositif d'affichage électronique selon l'une des revendications précédentes 8 à 12, **caractérisé en ce que** :
- le dispositif d'affichage électronique (A) comporte au moins un dispositif de saisie et
- le dispositif de commande (ST) est prévu pour couper le champ d'affichage électronique (AF) dans la mesure où aucune opération de commande n'est enregistrée par l'au moins un dispositif de saisie pendant une durée de temps définie.

14. Dispositif d'affichage électronique selon l'une des revendications précédentes 8 à 13, **caractérisé en ce que** le dispositif d'affichage électronique (A) est un tableau de commande et de surveillance d'une installation de la technique d'automatisation.

15. Dispositif d'affichage électronique selon l'une des revendications précédentes 8 à 14, **caractérisé en ce que** le champ d'affichage électronique (AF) est un écran à cristaux liquides, un écran à cristaux liquides et transistor à couches minces, un écran plasma ou un écran utilisant des diodes électroluminescentes organiques.

16. Installation de la technique de l'automatisation avec au moins un dispositif d'affichage électronique (A) selon l'une des revendications précédentes.
